# EUROPEAN PATENT APPLICATION

(11) **EP 2 608 537 A1**
(43) Date of publication of application: **26.06.2013**
(21) Application number: 11306738.3
(22) Date of filing: 21.12.2011
(51) Int. Cl.: H04N 7/26, H04N 7/50, G06T 1/20, G06T 5/00

(54) **Parallel and distributed processing of video data**

(71) Applicant: Thomson Licensing, 92130 Issy-les-Moulineaux (FR)
(72) Inventor: Pieper, Michael, 30659 Hannover (DE); Schmidt, Juergen, 31515 Wunstorf (DE); Kubsch, Stefan, 31559 Hohnhorst (DE); Gaedke, Klaus, 30659 Hannover (DE)
(74) Representative: Thies, Stephan

(57) **Abstract**

A processing cluster (2) and method for processing video content 12 within the processing cluster 2 is provided. The processing cluster 2 comprising a server 4 and a plurality of clients 6 wherein video content 12 is received at the server 4 and separated into a plurality of work packages. A workload for processing a single work package is estimated and work packages are distributed to the plurality of clients 6 by assigning and transmitting a certain number of work packages to a respective one of the clients 6 for processing of the work packages.

## Description

### FIELD OF THE INVENTION

The invention relates to a method for processing video content within a processing cluster comprising a server and a plurality of clients. Further, the invention relates to a processing cluster for processing video content. The invention further relates to the use of a computer cluster for execution of said method.

### BACKGROUND

Video content like a TV-production or a Hollywood movie is usually provided with metadata which allows a user to comfortably navigate within the video content on a content based basis. The widely known user menu which appears upon reproduction of a DVD or Blu-ray is build on content based metadata and allows a user to select scenes of a movie, for example. More complex user interfaces allow a selection of different topics of interest, certain actors, or the like. These user friendly menus which allow a comfortable navigation of the video content are based on metadata of the video content. However, metadata has to be generated. For the generation of metadata, the video content has to be processed using suitable metadata generating algorithms. This may be a demanding task for the applied video processing equipment, with respect to processing power as well as with respect to the necessary processing time.

Further, a small amount of video content is generated or recorded using digital technology and is available in a high quality digital video format. There is much video information that is a result of digitalization of classical analogue media, for example classical Hollywood movies. In most cases, this video information has to be refined in order to comply with modern quality standards. For example, dirt and scratch detection and removal may be performed in order to offer a high quality video production to the customer. However, typical algorithms for video quality enhancement need reasonable processing power.

In order to accelerate this image based video processing, computer clusters comprising a plurality of parallel working computers are applied. The computers are linked to each other so as to form a processing cluster. Due to parallelization of the video processing, the processing time may be reduced. However, the cost for provision of the processing power must not be neglected and parallelization of image based video processing mainly results in savings with respect to processing time only. Further, computer clusters generate a high network load, especially at the data links inside the processing cluster. A large amount of data has to be transferred between the different processing clients. The high network load causes further expenses.

### SUMMARY

It is an object of the invention to provide an economic processing cluster and an economic method for processing video content. It is a further object of the invention to provide a processing cluster and a method offering reduced network load inside the processing cluster.

According to an aspect of the invention, a method for processing video content within a processing cluster comprising a server and a plurality of clients is provided. First, the server receives the video content. Preferably, the video content is a download from a file-server. Subsequently, the video content is separated into a plurality of work packages at the server. For each of the work packages, a workload for processing this single work package is estimated. The work packages are subsequently distributed to the plurality of clients by assigning and transmitting a certain number of work packages to a respective one of the clients. The number of work packages that is assigned to a client is a function of an estimated client workload that is calculated from the sum of the estimated workloads for the work packages which are assigned to the respective client. This distribution of work packages is performed so as to average the workload between the clients. Finally, the work packages are processed at the clients.

Advantageously, the method for processing the video content distributes and averages the workload between the clients of the distributed processing cluster. This will help optimizing the total processing time because the full processing capacity of the clients of the processing cluster is utilized. Further, the network load inside the processing cluster may be reduced. This is because single work packages are communicated between the server and the processing clients only. Advantageously, it is not necessary to communicate the complete video content for example a full Hollywood movie to each of the clients.

According to another aspect of the invention, the video content is separated into a plurality of groups of pictures (within the context of this specification, a group of pictures is also referred to as a "GOP"), wherein each GOP represents a work package. In an advantageous embodiment of the invention, the video content is coded according to an MPEG-standard, for example MPEG2 or MPEG4. However, a separation into a plurality of groups of pictures may be performed for arbitrary video coding standards, too. Preferably, the further video coding standard applies a definition of a GOP which is comparable to the definition in the MPEG-standard.

A typical MPEG-encoded video stream comprises a plurality of sequences wherein each sequence comprises a sequence header and a plurality of GOPs, in the sequence layer. Advantageously, the separation of the video content may be performed in the sequence layer (which is one of the upper layers of the MPEG video stream). Accordingly, it is not necessary to perform full decoding of the video content at the server but a demultiplexing of the MPEG video stream only.

According to another advantageous embodiment of the invention, a Start-Frame of each work package, i. e. the first frame in each work package, is an Intra Coded Frame (I-Frame). An End-Frame of the work package, i. e. a last frame of the respective work package, is a Predictive Coded Frame (P-Frame) or a Bidirectionally Coded Frame (B-Frame). Said P-Frame or B-Frame is located directly before an I-Frame. Within the context of this specification, the term "before" refers to the chronological order of the frames. In other words, the term "before" refers to the designated order of frames for playback of the video content.

Advantageously, a GOP comprises the full video information of a short sequence of the video content. The length of this sequence may vary depending on the applied MPEG-standard. For example, a typical length of a GOP is about 500ms for MPEG2 and a few seconds for MPEG4. Accordingly, image based video processing may be performed on this respective part or sequence of the video information. Advantageously, the full video information of the respective sequence may be decoded from the frames of a GOP. Image based processing algorithms may be executed on said sequence without limitations.

In an MPEG-encoded video stream, there are three different types of frames, namely the I-Frame, the P-Frame and the B-Frame. An I-Frame is a still image which is encoded using a discrete cosine transformation (DCT) which is similar to JPEG encoding. Encoding is performed within the frame only and this is why an I-Frame is also referred to as an intra coded frame. P-Frames are predicted from a previous I-Frame or P-Frame. B-Frames are predicted from both, the previous I-Frame or P-Frame and the next I-Frame or P-Frame. The data compression of a P-Frame is higher compared to an I-Frame, wherein a B-Frame provides the highest compression in comparison to the two other types of frames. The video encoding according to the MPEG-standard is a vector based coding which means that in the P- and B-Frames, the respective blocks of the video frames which are changing in comparison to the preceding or subsequent frames are encoded only. The remaining information of a respective P- or B-Frame is taken from the preceding or subsequent frame. This commonly known MPEG coding scheme results in GOPs which do not always comprise a same number of bits (also commonly referred to as "NOB"). The NOB of a GOP is a function of the encoded video content. For example, for scenes having highly varying video content, the compression rate will be lower and the NOB of a GOP higher compared to scenes comprising highly redundant video information.

It has been recognized that this characteristic of the MPEG-encoding may influence the image based video processing. According to an aspect of the invention, the workload for a work package, i. e. for a GOP, is estimated based on the respective NOB of the GOP. A GOP having a high NOB will comprise a high amount of video information, for example an action scene having highly varying image content. In contrast a GOP having a low NOB will comprise a video sequence having a high amount of redundant video information. This will affect the image based processing of the respective work packages in that a processing algorithm, e. g. scratch detection and removal will be more costly for a work package comprising highly varying video information in comparison to a work package comprising more or less redundant video information. Advantageously, the workload may be averaged between the processing clients by help of the estimation for the workload of the GOPs. In other words, a processing client will be assigned few work packages demanding high processing power or a high number of work packages demanding low processing power.

According to another aspect of the invention, processing of the work packages at the clients comprises the execution of at least one image processing algorithm. The method may be executed in a processing cluster which is designed for video processing. For example, an image processing algorithm may be an algorithm for scratch detection and removal and/or dirt detection and removal. Further image processing algorithms may be suitable for generation of metadata. Another suitable image processing algorithm which may be performed by a processing client may be brightness and sharpness enhancement or a more complex algorithm like face detection, face recognition and/or face clustering.

According to another aspect of the invention, a processing cluster for processing of video content is provided. The processing cluster comprises a server and a plurality of clients. The server receives the video content. Subsequently, the video content is separated into a plurality of work packages at the server. A workload for processing a single work package is estimated for each of the work packages. Subsequently, the work packages are distributed in the processing cluster, wherein the server assigns and transmits the work packages to the clients. A number of work packages which is assigned and transmitted to a respective one of the clients is a function of an estimated client workload that is calculated from the sum of the estimated workloads for the work packages which are assigned to the respective client. Finally, the work packages are processed at the clients. Advantageously, the server and the clients may be sub units of a computer and are linked via a bus system of the computer which has a parallel computing architecture. Further, the server and the clients may be computers and/or set-top boxes which are linked to each other so as to form a processing cluster.

According to another aspect of the invention, the computer cluster may be used for execution of the above mentioned method according to aspects of the invention.

Same or similar advantages which have been already mentioned with respect to the method according to aspects of the invention apply to the processing cluster and to the use of the computer cluster in a same or similar way; therefore this advantages will not be mentioned repeatedly.

### BRIEF DESCRIPTION OF DRAWINGS

Further aspects of the invention will ensue from the following description of example embodiments of the invention with reference to the accompanying drawings, wherein
FIG.1 is a simplified processing cluster,
FIG. 2 is a simplified diagram illustrating the structure of an MPEG encoded video stream and
FIG. 3 is a simplified histogram illustrating an estimated workload for a plurality of different work packages.

### DETAILED DESCRIPTION OF AN EXAMPLE EMBODIMENT

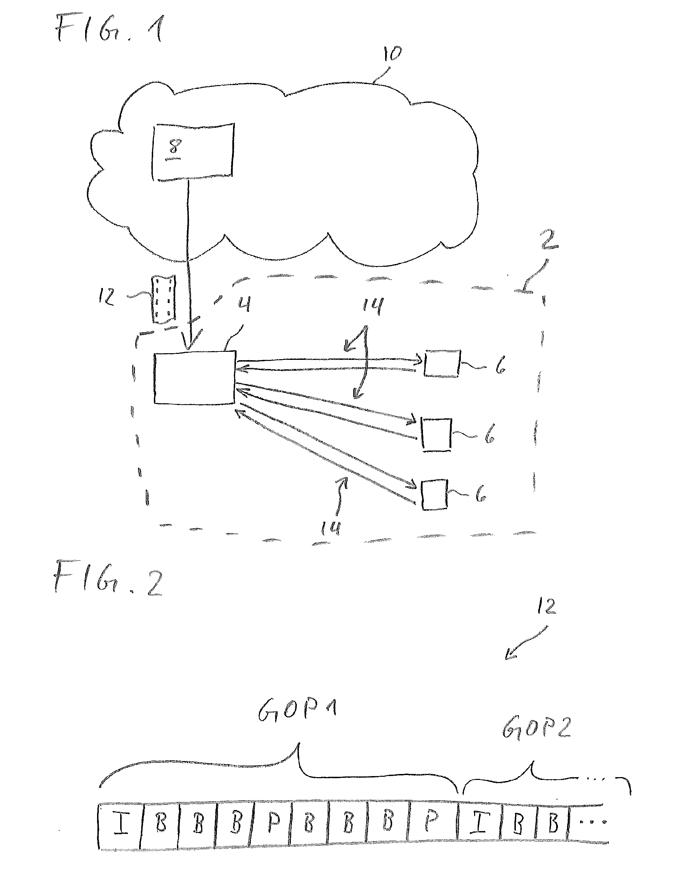

FIG. 1 is a simplified diagram showing a processing cluster 2 comprising a server 4 and, by way of an example only, three clients 6. The server 4 and the clients 6 may be computers, for example PCs which are linked so as to form a processing cluster 2. According to another embodiment, the server 4 and the clients 6 are set-top boxes which are arranged in a distributed home entertainment system. In another advantageous embodiment, the server 4 and the clients 6 are computer sub units which are linked via a bus system. For example, a sub unit may be central processing unit (CPU) or a processor core, a graphics processing unit (GPU).

According to the embodiment, the video content 12 is provided by a file server 8 and is downloaded to the server 4. By way of an example only, the file server 8 may be part of a wider network, for example the internet 10. The video content 12 which may be a TV-production or a Hollywood movie may be encoded according to an MPEG-standard. Preferably, the video content 12 is encoded according to the MPEG2 or MPEG4-standard.

At the server 4, the video content 12 is separated into a plurality of work packages. Subsequently, the work packages are communicated via a suitable link 14 to the clients 6. For a processing cluster comprising a plurality of PCs or a plurality of set-top boxes, the data link 14 may be a typical LAN data link, for example Ethernet or WLAN. For a processing cluster comprising computer sub units, the data link 14 may be a link of a bus system.

Image based video processing of the video content 12 is performed at the clients 6. Image processing algorithms such as quality enhancing algorithms e. g. scratch detection and removal and/or dirt detection and removal or even more complex image processing algorithms like face detection, face recognition and/or face clustering may be performed by the clients 6.

In order to distribute and average the workload between the clients 6 and at the same time to reduce the network traffic, especially at the intranet represented by the data links 14 connecting the server 4 and the clients 6, the video content 12 is separated at the server 4 into a plurality of work packages. Averaging the workload will optimize the performance of the processing cluster, too.

FIG. 2 is a simplified diagram illustrating an MPEG encoded video stream, i. e. MPEG encoded video content 12. The video content 12 comprises a plurality of groups of pictures (GOP1, GOP2, ...) wherein each GOP comprises the typical types of frames, namely the I-Frame (I) the B-Frame (B) and the P-Frame (P). By way of an example only, a group of pictures (e. g. GOP1) comprises the following sequence of frames: I, B, B, B, P, B, B, B, P. A GOP may be compiled from an MPEG video stream at the sequence layer. According to an embodiment of the invention, the video content 12 is separated into a plurality of work packages wherein each work package comprises one group of pictures, for example GOP1.

Further, the server 4 estimates a workload for processing a work package i. e. for processing the respective GOP. This estimation of processing workload may be performed based on a number of bits (NOB) of the respective GOP.

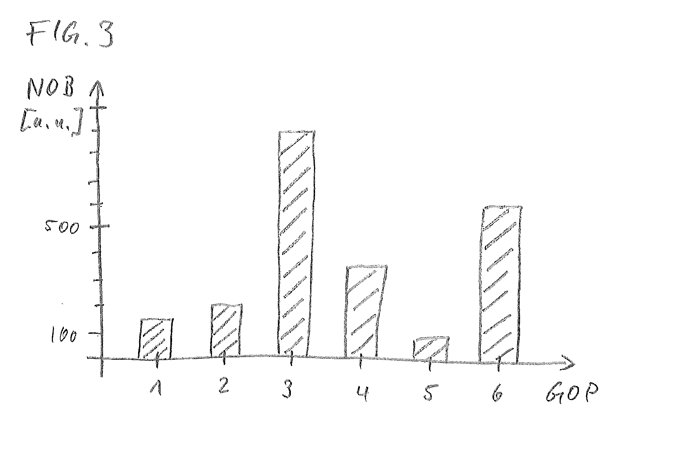

FIG. 3 is a simplified histogram showing a number of bits (NOB) for a plurality of GOPs. By way of an example only, the NOB is illustrated for six GOPs (1 to 6). For example, the first and second GOP comprise between 100 and 200 bits, the third GOP comprises nearly 1000 bits. The respective NOB for the GOP depends on the video content of the respective GOP. In other words, a GOP comprising highly redundant video information leads to a high compression rate and accordingly a low NOB. In contrast, a GOP comprising video information with highly varying frames, e. g. an action scene, leads to a low compression rate and accordingly the GOP has a high NOB. In order to distribute and average the workload between the clients 6, the server 4 will assign many or few work packages to each of the clients 6. For example, a first client 6 will be assigned the first, second, fourth and fifth GOP while a second and third client 6 will be assigned the third and the sixth GOP, respectively. Consequently, each of the clients 6 is assigned about a same number of bits (NOB) for processing. Accordingly, the workload may be distributed within the processing cluster 2 and the performance of the processing cluster may be optimized because all processing clients work at nearly full load at each moment in time.

According to a rough estimation, the network load for processing 10 Gigabyte of video information, according to a method known from the prior art, would be about 40 Gigabyte. The first 10 Gigabyte are for downloading the video information 12 from the file server 8 to the server 4. Subsequently, the full video information 12 has to be communicated via the links 14 from the server 4 to the clients 6 which means an overall network load of 3 x 10 Gigabyte i. e. 30 Gigabytes.

In contrast, according to an embodiment of the invention and due to the separation of the video content 12 at the server 4, the network load may be reduced significantly. The full video information 12 is communicated to the clients 6 but the network load is about one times the video information 12 only. In other words, by making reference to the afore-mentioned example, there are 10 Gigabytes for downloading the video content 12 from the file server 8 to the server 4. Subsequently, the video content 12 is separated into a plurality of work packages and about 10 Gigabytes of work packages are communicated via the links 14 from the server 4 to the clients 6. There are slightly more than 10 Gigabytes only, because not the full video information 12 will be communicated to each of the processing clients 6 but work packages only.

Further, it has to be noticed that the communication of the processing results is disregarded in this estimation, for the prior art process as well as for the embodiment. However, if it is assumed that the processing results, which have to be communicated from the clients 6 to the server 4 via the links 14, have about the same amount of data as the work packages themselves, for example because a quality enhancement of the respective video information 12 has been performed and the refined video information has to be concatenated by the server 4 and therefore has to be communicated from the clients 6 to the server 4, savings for the network load are even higher for the embodiment according to aspects of the invention.

Although the invention has been described hereinabove with reference to specific embodiments, it is not limited to these embodiments and no doubt further alternatives will occur to the skilled person that lie within the scope of the invention as claimed.

## Claims

1. A method for processing video content (12) within a distributed processing cluster (2) comprising a server (4) and a plurality of clients (6), the method comprising the steps of:
a) receiving the video content (12) at the server (4),
b) separating the video content (12) into a plurality of work packages at the server (4),
c) estimating a workload for processing of a single work package, for each of the work packages,
d) distributing the work packages to the plurality of clients (6) by assigning and transmitting a certain number of work packages to a respective one of the clients (6), wherein a number of work packages that is assigned to a client (6) is a function of an estimated client workload that is calculated from the sum of the estimated workloads for the work packages which are assigned to the respective client (6), so as to average the workload between the clients (6) and
e) processing the work packages at the clients (6).

2. The method for processing video content according to claim 1, wherein the video content (12) is separated into a plurality of groups of pictures (GOP) as work packages.

3. The method for processing video content (12) according to claim 2, wherein a Start-Frame of each work package is an Intra Coded Frame (I-Frame) and an End-Frame of each work package is a Predictive Coded Frame (P-Frame) or a Bidirectionally Coded Frame (B-Frame), wherein said P-Frame or B-Frame is located directly before an I-Frame.

4. The method for processing video content (12) according to claim 2 or 3, wherein the estimation of the workload for a work package is based on a Number of Bits (NOB) of the respective GOP representing the work package.

5. The method for processing video content (12) according to one of the preceding claims, wherein the received video content (12) is encoded according to an MPEG-standard.

6. The method for processing video content (12) according to one of the preceding claims, wherein the step of processing the work packages at the clients (6) the execution of at least one image processing algorithm.

7. A processing cluster (2) for processing video content, the processing cluster (2) comprising a server (4) and a plurality of clients (6), wherein the processing cluster (2) is configured to:
a) receive the video content (12) at the server (4),
b) separate the video content (12) into a plurality of work packages at the server (4),
c) estimate a workload for processing of a single work package, for each of the work packages,
d) distribute work packages to the plurality of clients (6) by assigning and transmitting a certain number of work packages to a respective one of the clients (6), wherein a number of work packages that is assigned to a client (6) is a function of an estimated client (6) workload that is calculated from the sum of the estimated workloads for the work packages which are assigned to the respective client (6), so as to average the workload between the clients (6) and
e) process the work packages at the clients (6).

8. The processing cluster (2) according to claim 7, wherein the server (4) and the clients (6) are processing sub units of a computer and are linked via a bus system of the computer having a parallel computing architecture.

9. The processing cluster (2) according to claim 7, wherein the server (4) and the clients (6) are computers and/or set-top boxes which are linked to each other so as to form a distributed processing cluster (2).

10. Use of a computer cluster according to one of claims 7 to 9 for execution of the method according to one of claims 1 to 6.
